# EUROPEAN PATENT APPLICATION

(11) **EP 0 766 249 A2**
(43) Date of publication of application: **02.04.1997**
(21) Application number: 96307124.6
(22) Date of filing: 27.09.1996
(51) Int. Cl.: G11B 23/03

(54) **Disk cartridge**

(30) Priority: 29.09.1995 JP 254089/95; 02.10.1995 JP 255413/95
(71) Applicant: DAI NIPPON PRINTING CO., LTD., Shinjuku-ku, Tokyo-to (JP)
(72) Inventor: Kameda, Katsumi, c/o Dai Nippon Printing Co.,Ltd., Tokyo-to (JP)
(74) Representative: Needle, Jacqueline

(57) **Abstract**

A disk cartridge comprises an upper shell (2), a lower shell (1) to be bonded to the upper shell with an inner hollow portion therebetween in which a disk (11) is accommodated. A slider (4) is disposed to be movable in the hollow portion formed between the upper and lower shells. A shutter (3) is attached to the slider (4), and a spring (5) urges the slider (4) in one direction so that the shutter (3) closes an opening (2a) in the upper shell (2). The slider is formed with an insertion hole (4g) into which one end engaging portion (5a) of the spring (5) is inserted, the insertion hole (4g) being defined by a flat surface (4e) extending substantially parallel to the longitudinal direction of the slider, and surface (4f) which is inclined with respect to the flat surface. The insertion hole (4g) is formed with an end engaging hole portion (4h) at a deepest portion thereof, the end engaging hole portion having a shape capable of limiting the movement of the end engaging portion of the spring (5).

## Description

The present invention relates to a disk cartridge, for example, to a disk cartridge provided with a slider having a specific shape and an improved structure.

In general, a disk cartridge (Disk Cartridge) for accommodating a disk therein has been widely known.

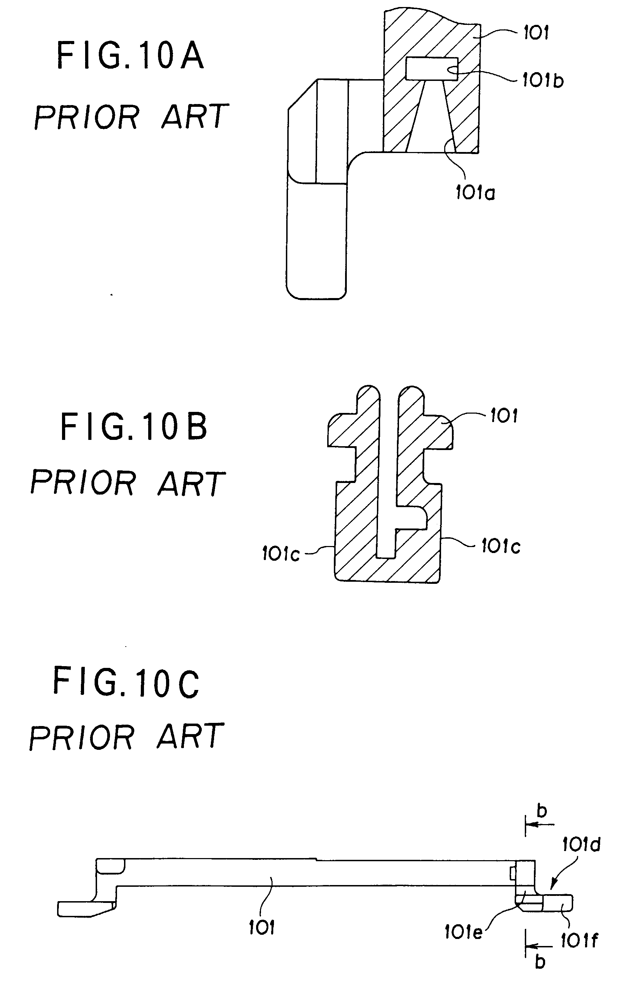

Figure 10 shows a partial sectional view of a slider of a substantially conventional disk cartridge, and in Figure 10A a slider 101 has an end portion provided with a spring insertion hole 101a for inserting a spring (not shown), the insertion hole 101a being formed so as to provide a tapered surface which is made narrow in its depth direction. A window portion 101b elongated in the bilateral direction thereof is formed to the bottom, i.e. upper end, as viewed, portion of the insertion hole 101a so that an engaging portion of the spring is engaged with the window.

Referring to Figure 10B, the slider 101 is provided with flat sliding surfaces 101c, 101c which slide along upper and lower shells, not shown, of a disk cartridge. Further, with reference to Figure 10C, the slider 101 is also provided with leg portions 101d, 101d, each of which is composed of a recessed portion 101e extending in a direction normal to the longitudinal direction of the body of the slider 101 and a projection 101f projecting outward from the end of the recessed portion 101e.

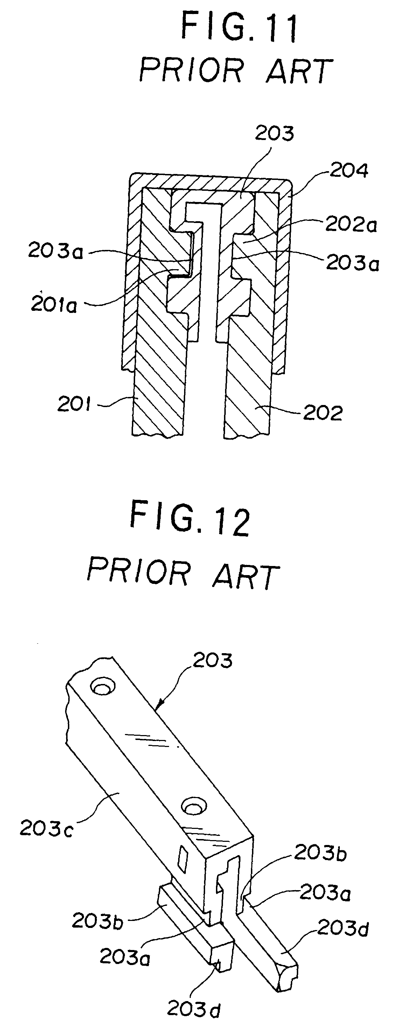

Figure 11 shows a sectional view of an important portion of a substantially conventional disk cartridge, in which reference numeral 201 denotes an upper shell to which a lower shell 202 is bonded. A slider 203 is disposed between the upper shell 201 and the lower shell 202 to be slidable, and a shutter 204 is fixed to the slider 203. The slider 203 is formed with recessed portions 203a, 203a, each having substantially ⊐-shape, which are engaged with protruded portions 201a, 202a, each having substantially ⊐-shape, formed to the upper and lower shells 201 and 202, respectively. Through the engagement between these recessed and protruded portions, the slider 203 is prevented from coming off from the upper and lower shells 201 and 202.

Figure 12 is a perspective view of an important portion of the slider 203 to be usable for a disk cartridge of conventional structure. The leg portion 203b is formed to the end portion of the slider 203 so as to project outward in a direction normal to the body portion 203c of the slider 203, and the leg portion 203b is provided at its end portion with a projection 203d extending outward in the longitudinal direction of the body portion 203c of the slider 203. The projections 203d formed to the end portions of both leg portions 203b are engaged with the upper and lower shells 201 and 202, respectively, to thereby prevent the slider 203 from coming off from the shells 201 and 202.

According to the structure of the slider having the tapered insertion hole 101, it is easy to insert a spring at a time of manufacturing. However, since the insertion hole has a wide opening area, the strength of the slider itself is made weak, providing a problem. Moreover, when an end portion of the spring disposed in the window is moved therein, an urging force of the spring varies, and in such case, there provides a problem that the shutter cannot be smoothly moved, thus also providing a problem. Since the slider has the flat sliding surfaces, the slider will be easily come off. Furthermore, since the leg portion is composed of the recessed portion and the projection to provide an L-shape, the slider is likely come off. The recessed portion of the slider has a thin thickness, being weak in strength at this portion, and when the shells are likely bent, the slider will be easily come off, also providing a problem. Still furthermore, since the slider has a complicated structure, it is difficult to manufacture the slider, and particularly, it is further difficult to manufacture the same with high dimensional precision.

It is an object of the present invention to reduce defects or drawbacks encountered in the prior art.

According to a first aspect of the present invention there is provided a disk cartridge comprising upper and lower shells bonded to define an inner hollow portion in which a slider is movable, a shutter coupled to the slider, and a resilient member for urging the slider in one direction, wherein said slider has an insertion hole in which one end engaging portion of the resilient member is received, said insertion hole being defined by a substantially flat surface extending substantially parallel to a longitudinal direction of the slider and by a surface which is inclined with respect to the flat surface, and wherein the insertion hole has an end engaging hole portion shaped to limit the movement of the end engaging portion of the resilient member.

The present invention further provides a disk cartridge which comprises an upper shell, a lower shell to be bonded to the upper shell with an inner hollow portion, a slider disposed to be movable in the hollow portion formed between the upper and lower shells, a shutter attached to the slider and an elastic member disposed between the slider and the upper or lower shell for urging the slider in one direction, wherein the slider is formed with an insertion hole into which one end engaging portion of the elastic member is inserted, the insertion hole being defined by a flat surface in substantially parallel to a longitudinal direction of the slider and an inclining surface having inclination with respect to the flat surface, and the insertion hole is formed with an end engaging hole portion at a deepest portion thereof, the end engaging hole portion having a shape or volume capable of limiting a movement of the end engaging portion of the elastic member.

According to a further aspect of the invention, there is provided a disk cartridge comprising upper and lower shells bonded to define an inner hollow portion in which a slider is movable, a shutter coupled to the slider, and an elastic member for urging the slider in one direction, wherein said slider has sliding surfaces for sliding with respect to respective facing surfaces of the upper and lower shells, and wherein at least one of the sliding or facing surfaces has a recessed portion in which a protruding portion of the respective facing or sliding surface is engaged.

In another aspect, there is provided a disk cartridge which comprises an upper shell, a lower shell to be bonded to the upper shell with an inner hollow portion, a slider disposed to be movable in the hollow portion formed between the upper and lower shells, a shutter attached to the slider and an elastic member disposed between the slider and the upper or lower shell for urging the slider in one direction, wherein the slider is formed with sliding surfaces with respect to the upper and lower shells, at least one of the sliding surfaces being formed with a recessed portion which is engaged with a protruded portion formed to a surface, facing the sliding surface of the slider, of at least one of the upper and lower shells.

The invention also extends to a disk cartridge comprising upper and lower shells bonded to define an inner hollow portion in which a slider is movable, and a shutter coupled to the slider, and an elastic member for urging the slider in one direction, wherein said slider has longitudinal end portions to which leg portions are formed, one of said leg portions being formed with a first engaging portion and one of said upper and lower shells is formed with a second engaging portion which is engaged with the first engaging portion when the shutter is in a closed position.

In a further aspect, there is provided a disk cartridge which comprises an upper shell, a lower shell to be bonded to the upper shell with an inner hollow portion, a slider disposed to be movable in the hollow portion formed between the upper and lower shells, a shutter attached to the slider and an elastic member disposed between the slider and the upper or lower shell for urging the slider in one direction, wherein the slider has longitudinal end portions to which leg portions are formed, one of the leg portions being formed with a first engaging portion and one of the upper and lower shells is formed with a second engaging portion which is engaged with the first engaging portion when the shutter is in a closed position.

In a still further aspect, there is provided a disk cartridge which comprises an upper shell, a lower shell to be bonded to the upper shell with an inner hollow portion, a slider disposed to be movable in the hollow portion formed between the upper and lower shells and a shutter attached to a mounting surface of the slider, wherein the upper and lower shells are provided with flanged portions extending inward toward the slider and the slider is formed with cutouts at the shutter mounting surface which are engaged with the flanged portions.

The slider is composed of side leg portions extending along the longitudinal direction thereof and a connection portion connecting the side leg portions and the mounting surface is formed to the connection portion. A further cutout is formed to an end portion of at least one of the side leg portions, the further cutout being engaged with a staged portion formed to a surface, facing the side leg portion, of at least one of the upper and lower shells.

Embodiments of the invention enable a disk cartridge to be provided which is capable of preventing a slider from coming off without changing an urging force of a spring member.

Embodiments of the invention provide a disk cartridge whose slider is easy to manufacture and has improved strength.

In embodiments of the present invention having the structure described above, since the spring insertion hole is defined by the flat surface and the inclining surface, the opening area of the insertion hole is reduced in comparison with the tapered hole of the conventional structure, thus improving the strength of the slider. Since the hole portion into which one end of the elastic member is fitted has a shape suitable for limiting the movement of the end portion of the elastic member, the movement of the slider is made stable. The movement of the slider can be further made stable through the engagement between the recessed portion formed to the sliding surface of the slider and the protruded portion formed to the upper or lower shell, thereby preventing the slider from coming off. Since the engaging portion formed to the leg portion of the slider and the engaging portion formed to the upper or lower shell are engaged together at the shutter closing time, the coming off of the slider can be effectively prevented even if any impact is applied to the disk cartridge.

Embodiments of the present invention will hereafter be described, by way of example, with reference to the accompanying drawings, in which :
Figure 1 is a perspective view of a disk cartridge according to an embodiment of the present invention;
Figure 2 shows an inside plan view of an upper shell for the disk cartridge of Figure 1;
Figures 3A and 3C are side views of a slider for the disk cartridge of Figure 1;
Figure 3B is a plane view of slider for the disk cartridge of Figure 1;
Figure 4 is a sectional view taken along the line IV-IV in Figure 3B;
Figure 5 is a partial sectional view taken along the line V-V in Figure 3B;
Figure 6 is a sectional view of an important portion of a disk cartridge according to another embodiment of the present invention;
Figure 7 is a perspective view, in an enlarged scale, of an important portion of a slider of another example for the disk cartridge of the present invention;
Figure 8 is a partial plan view of the disk cartridge of the present invention;
Figure 9 is a sectional view of an important portion of a disk cartridge according to a further embodiment of the present invention;
Figures 10A and 10B are sectional views of a slider for a disk cartridge having conventional structure viewed from various directions;
Figure 10C is a side view of a slider for the conventional disk cartridge;
Figure 11 is a sectional view of an important portion of the conventional disk cartridge; and
Figure 12 is a perspective view, in an enlarged scale, of an important portion of a slider for the disk cartridge of the conventional structure.

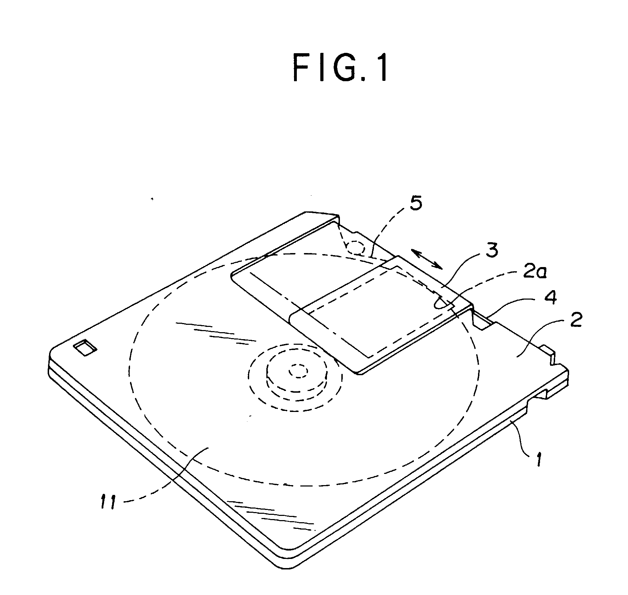

Figure 1 is a perspective view of a disk cartridge of an embodiment of the present invention.

Referring to Figure 1, the disk cartridge comprises a lower shell 1 and an upper shell 2 which is bonded to the lower shell with an inner hollow portion therebetween in which a disk 11 is accommodated to be turnable. The lower shell 1 and the upper shell 2 are formed with openings, only the opening 2a of the upper shell 2 being shown, and a shutter 3 is provided to be reciprocal in a direction along an arrow in Figure 1 to open or shut the opening 2a.

A slider 4 is further disposed in the inner hollow portion between the lower and upper shells 1 and 2 to be movable or slidable along the arrowed direction and the shutter 3 is secured to the slider 4 by means of, for example, a screw (not shown). A coil spring 5 is interposed between the slider 4 and a body of the cartridge so that the shutter 3 always covers the opening 2a of the upper shell 2.

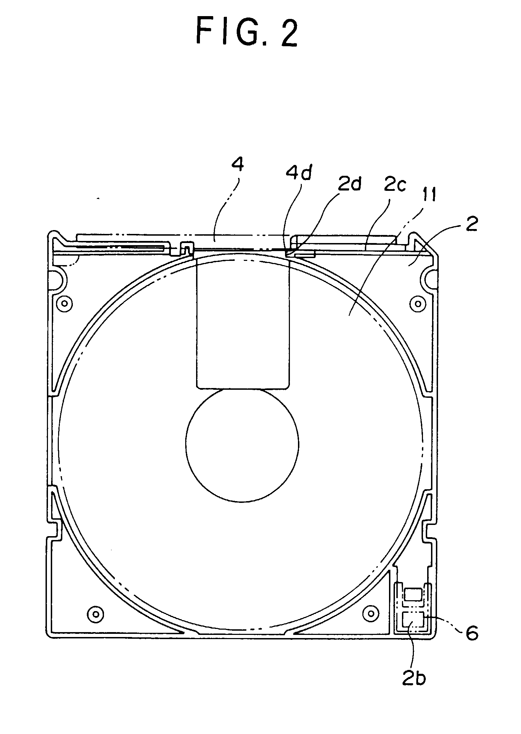

Figure 2 shows an inner plan view of the upper shell 2 for a disk cartridge of the present invention. A light protector 6 is accommodated in the upper shell 2, which is formed with a guide 2b for guiding the movement of the light protector 6.

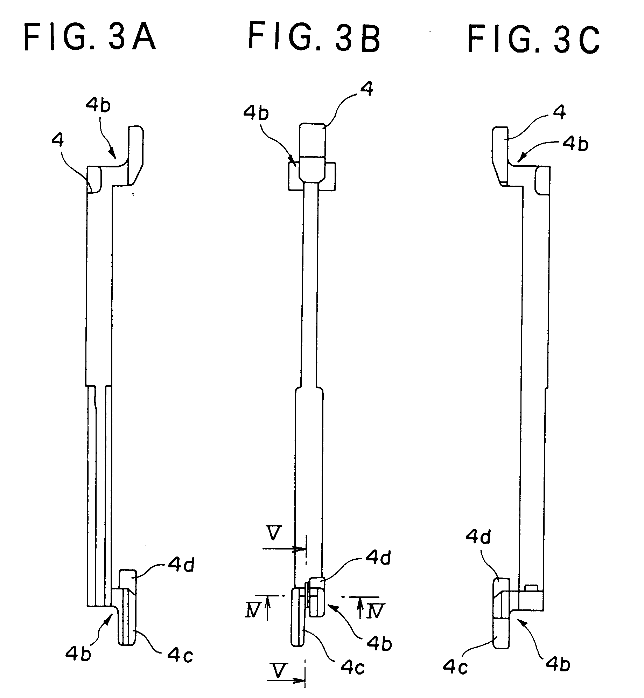

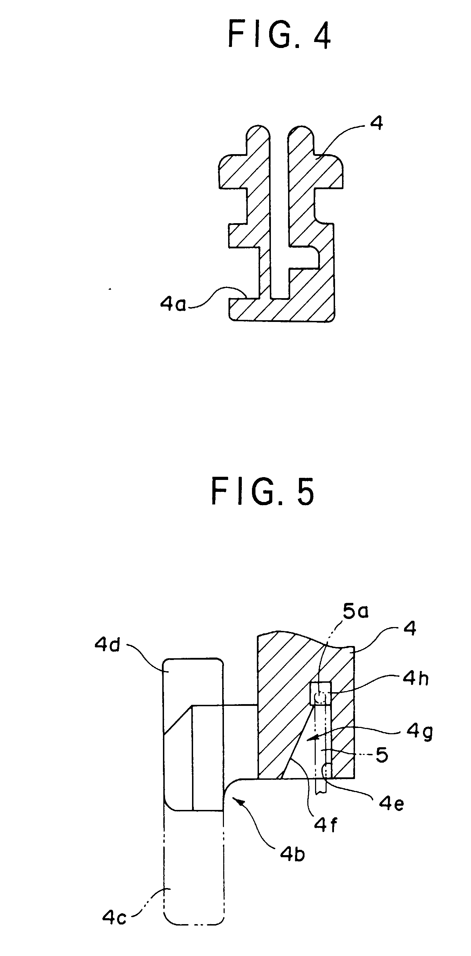

Figures 3A to 3C represent the slider 4 for a disk cartridge of the present invention. The slider 4 is formed with a groove 4a as shown in Figure 4 at a proper portion of the slider 4, the groove 4a extending in the longitudinal direction of the slider 4. Further, as shown in Figure 2, the upper shell 2 is formed with a protruded portion 2c having a shape capable of being engaged with the groove 4a of the slider 4, and the coming-off of the slider 4 at the slider moving time can be prevented through the engagement between the protruded portion 2c and the groove 4a.

With reference to Figure 3, the slider 4 has both ends to which are formed leg portions 4b, 4b, one of which, the lower one as viewed in Figure 3A, is formed with an outward projection 4c and an inward projection 4d. The inward projection 4d is engaged with a recessed portion 2d formed to the upper shell 2 when the shutter 3 is closed, thereby preventing the slider 4 from coming off at the shutter closing time.

Referring to Figure 5, the slider 4 is formed at its one end with an insertion hole 4g into which an end engaging portion 5a of a coil spring 5 is inserted. The insertion hole 4g is defined by a flat surface 4e in parallel to the longitudinal direction of the slider 4 and an inclining surface 4f having an inclination with respect to the flat surface 4e. The insertion hole 4g is provided with an engaging hole portion 4h at the deepest portion thereof with which the end engaging portion 5a of the coil spring 5 is engaged when the coil 5 is inserted into the insertion hole 4g. Since the engaging hole portion 4h has a volume suitable for the shape of the end engaging portion 5a of the coil spring 5, when the coil spring 5 is inserted into the insertion hole 4g, the coil spring 5 is not largely moved therein. Accordingly, when the slider 4 is moved and even if the urging force of the coil spring 5 changes, the change of the urging force of the coil spring 5 due to the positional change of the end engaging portion 5a of the coil spring 5 with respect to the engaging hole portion 4h is substantially not caused, thus the slider 4 being stably moved. Moreover, since the insertion hole 4g is defined by the flat surface 4e having no inclination or taper with respect to the longitudinal direction of the slider 4, the opening area of the insertion hole 4g can be made small, thus improving the strength of the slider 4.

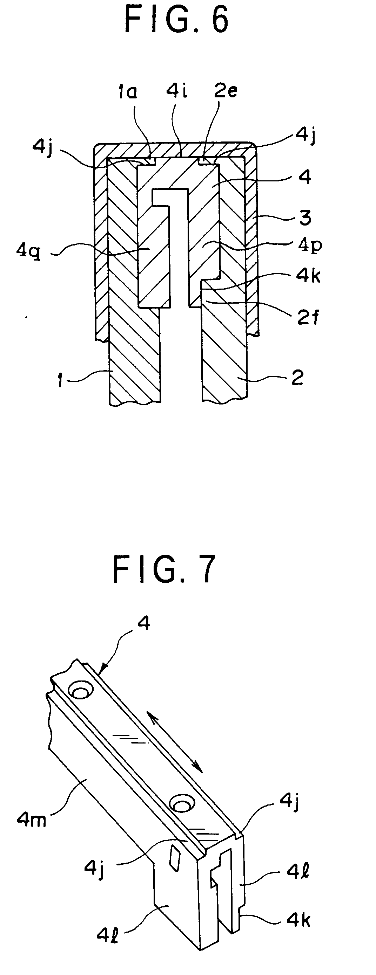

Figure 6 shows another embodiment of the disk cartridge of the present invention, in which the slider 4 is composed of side leg portions 4p and 4q extending in its longitudinal direction and a connection portion connecting the side leg portions 4p, 4q with space, and flanged portions la and 2e are formed to the upper, as viewed, ends of the lower and upper shells 1 and 2 so as to project inwardly of the disk cartridge. The slider 4 is provided at its width side ends with cutouts 4j, 4j to a mounting surface 4i of the slider 4 to which the shutter 3 is mounted, and the cutouts 4j, 4j have shapes corresponding to the shapes of the flanged portions la and 2e so that the flanged portions la and 2e can be firmly engaged with the cutouts 4j, 4j, respectively, to thereby firmly prevent the slider from coming off from the body of the disk cartridge. A cutout 4k is further formed to the slider 4 at a lower end portion of the side leg portion 4p, as viewed, thereof. The upper shell 2 is provided with a staged portion as an engaging portion 2f, which is engaged with the cutout 4k, and the lower shell 1 is also provided with a staged portion lc, which is engaged with a lower end portion of the other side leg portion 4q of the slider 4. The one side leg portion 4p of the slider 4 faces the upper shell 2 and the other side leg portion 4q thereof faces the lower shell 1.

According to the structure mentioned above, the movement of the slider 4 in the longitudinal direction thereof is limited by the engagement between the lower and upper shells 1 and 2 and the slider end portions.

Next, with reference to Figure 7, showing a perspective view of the slider 4, the slider 4 is composed of a slider body 4 and a leg portion 4m formed to one end portion of the slider body 4 so as to extend in a direction, arrowed direction in Figure 7, normal to the longitudinal direction of the slider body. As can be seen from the shown structure, since the slider 4 has no projecting portion as mentioned with reference to the prior art, the structure can be made simple, thus easily manufacturing the same with reduced cost.

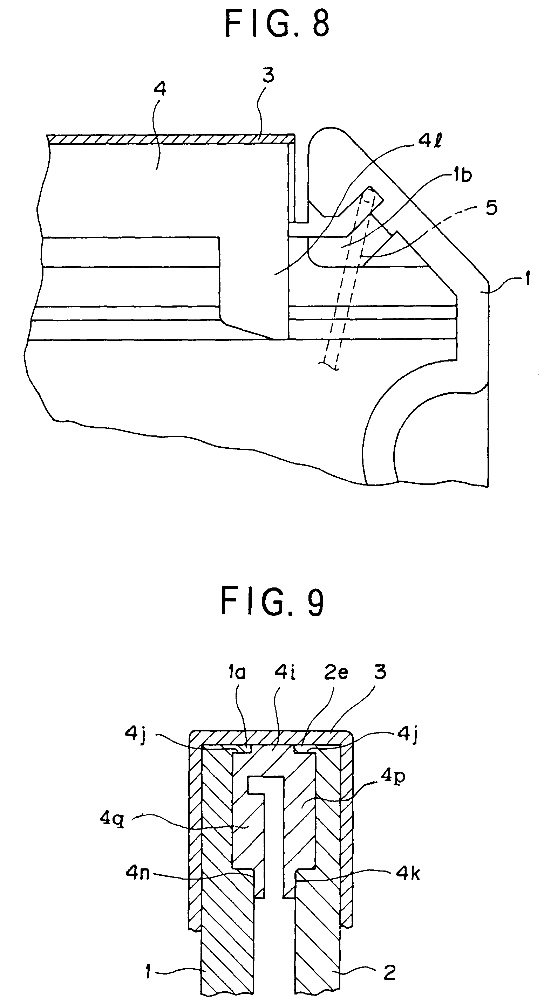

Further, referring to Figure 8, showing a state that the slider 4 is engaged with the lower shell 1 and the shutter 3 is hence opened, the slider leg portion 4m has no projecting portion even in the shutter opened portion. According to such structure, although the slider 4 does not engage with an edge portion 1b of the lower shell 1, the slider 4 is engaged with the flanged portions 1a and 2e of the lower and upper shells 1 and 2, so that the slider 4 is never come off.

Figure 9 shows a further embodiment of the present invention, in which a further cutout 4n is formed to the other side leg portion 4q of the slider 4 in addition to the cutout 4k for the one side leg portion 4p of the slider shown in Figure 6, which is engaged with the staged portion lc of the lower shell 1 to surely prevent the slider 4 from moving in the longitudinal direction, i.e. lower direction as viewed in Figure 9, of the slider 4.

As described above, according to the respective embodiments of the present invention, the opening area of the insertion hole can be made small, thus improving the strength of the slider. The movement of the slider can be suitably limited through the engagement of the spring member with the engagement hole formed to the slider. The slider can be surely prevented from coming off.

## Claims

1. A disk cartridge comprising upper and lower shells bonded to define an inner hollow portion in which a slider is movable, a shutter coupled to the slider, and a resilient member for urging the slider in one direction, wherein said slider has an insertion hole in which one end engaging portion of the resilient member is received, said insertion hole being defined by a substantially flat surface extending substantially parallel to a longitudinal direction of the slider and by a surface which is inclined with respect to the flat surface, and wherein the insertion hole has an end engaging hole portion shaped to limit the movement of the end engaging portion of the resilient member.

2. A disk cartridge as claimed in claim 1, wherein said end engaging hole portion has an inner volume corresponding to a volume of the end engaging portion of the resilient member.

3. A disk cartridge as claimed in claim 1 or claim 2, wherein said end engaging hole is formed at a deepest portion of said insertion hole.

4. A disk cartridge comprising upper and lower shells bonded to define an inner hollow portion in which a slider is movable, a shutter coupled to the slider, and an elastic member for urging the slider in one direction, wherein said slider has sliding surfaces for sliding with respect to respective facing surfaces of the upper and lower shells, and wherein at least one of the sliding or facing surfaces has a recessed portion in which a protruding portion of the respective facing or sliding surface is engaged.

5. A disk cartridge as claimed in claim 4, wherein a said recessed portion is formed in at least one sliding surface of the slider, and a said protruding portion is formed in the corresponding facing surface of the upper and lower shells and engaged in said recessed portion.

6. A disk cartridge comprising upper and lower shells bonded to define an inner hollow portion in which a slider is movable, and a shutter coupled to the slider, and an elastic member for urging the slider in one direction, wherein said slider has longitudinal end portions to which leg portions are formed, one of said leg portions being formed with a first engaging portion and one of said upper and lower shells is formed with a second engaging portion which is engaged with the first engaging portion when the shutter is in a closed position.

7. A disk cartridge comprising an upper shell, a lower shell to be bonded to the upper shell with an inner hollow portion, a slider disposed to be movable in the hollow portion formed between the upper and lower shells and a shutter attached to a mounting surface of the slider, wherein said upper and lower shells are provided with flanged portions extending inward toward the slider and said slider is formed with cutouts at the shutter mounting surface which are engaged with the flanged portions.

8. A disk cartridge as claimed in claim 7, wherein said slider comprises side leg portions extending along the longitudinal direction thereof and a connection portion connecting the side leg portions and said mounting surface is formed to the connection portion, and wherein a further cutout is formed to an end portion of at least one of said side leg portions, said further cutout being engaged with a staged portion formed to a surface, facing the side leg portion, of at least one of the upper and lower shells.

9. A disk cartridge as claimed in claim 7, wherein said slider comprises side leg portions extending along the longitudinal direction thereof and a connection portion connecting the side leg portions and said mounting surface is formed to the connection portion, and wherein a further cutout is respectively formed to an end portion of said side leg portions, said further cutout being engaged with a staged portion formed to a surface, facing the side leg portion, of at least one of the upper and lower shells.
